# EUROPÄISCHE PATENTSCHRIFT

(11) **EP 2 349 815 B1**
(45) Veröffentlichungstag und Bekanntmachung des Hinweises auf die Patenterteilung: **20.02.2013**
(21) Anmeldenummer: 09745051.4
(22) Anmeldetag: 03.11.2009
(51) Int. Cl.: B62D 3/12

(54) **LENKGETRIEBE**
STEERING GEAR
MÉCANISME DE DIRECTION

(30) Priorität: 26.11.2008 DE 102008044079
(43) Veröffentlichungstag der Anmeldung: 03.08.2011
(73) Patentinhaber: ZF Lenksysteme GmbH, 73527 Schwäbisch Gmünd (DE)
(72) Erfinder: HAUCK, Michael, 73630 Remshalden (DE); BAREIS, Helmut, 73569 Eschach (DE); DOSTER, Wilfried, 73550 Waldstetten (DE)
(86) Internationale Anmeldenummer: PCT/EP2009/064514
(87) Internationale Veröffentlichungsnummer: WO 2010/060750

(56) Entgegenhaltungen:
- JP-A- 60 038 260
- JP-A- 2005 125 975
- JP-U- 60 152 827
- ANONYM: "Berechnung der Keilwellenverbindungen" INTERNET ARTIKEL, [Online] 28. September 2008 (2008-09-28), XP002565015 Gefunden im Internet: URL:http://diglib.ethz.ch/system/temporary /get_wnv.ind9.search2331.htm> [gefunden am 2010-01-25]
- DIGITAL-DETECTIVE.CO.UK:: "WebDateTM Zeitstempel zum Veröffentlichungsdatum des Dokuments: "Berechnung der Keilwellenverbindungen" XP002565015" WEBDATE, 25. Januar 2010 (2010-01-25), XP002565016

## Beschreibung

Die Erfindung betrifft ein Lenkgetriebe für eine Servolenkung eines Fahrzeugs, mit einem, in einem Gehäuse des Lenkgetriebes axial verschiebbar gelagerten Bauelement, nach dem Oberbegriff des Anspruchs 1. Ein solches Lenkgetriebe ist aus der JP60-38260 A bekannt.

Lenkgetriebe für Servolenkungen von Fahrzeugen bei denen insbesondere eine Zahnstange ein axial verschiebbares Bauelement bildet, das quer zur Fahrzeuglängsachse eingebaut ist, wobei an beiden axialen Enden der Zahnstange Spurstangen gelenkig festgelegt sind, sind bekannt. Aus der DE 4422 559 A1 und der FR 2832973 B1 sind Lenkgetriebe bekannt, die eine konstruktive Lösung offenbaren, um die Anordnung des Lenkgetriebes bzw. der Zahnstange in Relation zu einer etwaigen Stöhrkontur des Fahrzeugs, insbesondere des Fahrzeugmotors aus lenkkinematischer Sicht zu verbessern. Zu diesem Zweck schlagen die Druckschriften vor, das Drehzentrum des Gelenks oder Kugelgelenks einer jeden Spurstange an der Zahnstange relativ zu deren Mittellängsachse durch einen Radialfortsatz seitwärts zu versetzen. Damit kann die Bewegungsbahn der zahnstangenseitigen Kugelgelenke einen größeren Abstand von der Zahnstange haben, d.h. die Lage der Kugelgelenke ist weitestgehend unabhängig von der Einbaulage der Zahnstange. Der Radialfortsatz wird durch einen Adapterteil gebildet, welches mittels eines an ihm angeformten muffenartigen Teiles mit im Querschnitt unrundem Öffnungsbereich auf dem entsprechend gegengleich unrunden Ende der Zahnstange angeordnet ist, wobei der muffenartige Teil des Adapterteils gemäß einer besonderen Ausgestaltungsform an der Zahnstange mittels einer Schraube kraftschlüssig gehalten ist, die sich in eine stirnseitige Gewindebohrung der Zahnstange eindrehen lässt.

Der Adapterteil ist nur mit hohem Fertigungsaufwand herzustellen. Zudem ist die vorgeschlagene Befestigungsschraube für den Adapterteil in ihrer Auslegung begrenzt, da eine radiaie Wandung auf der Zahnstange notwendig ist. Die vorgeschlagene kegelige Welle-Nabe-Verbindung zwischen der Zahnstange und dem Adapterteil ist durch das notwendige Innengewinde geschwächt.

Es sind Lenkgetriebe bekannt, deren Adapterteil an der Zahnstange durch eine Schraubverbindung, die durch ein Ende der Zahnstange, das als Gewindebolzen gebildet ist, auf dem eine Mutter festgelegt wird befestigt sind. Diese Schraubverbindungen sind aufwändig gebaut.

Der Erfindung liegt die Aufgabe zugrunde, ein Lenkgetriebe anzugeben, das eine hochbelastbare, spielfreie Verbindung zwischen seinem axial verschiebbaren Bauteil und dem Adapterteil aufweist und einfach herstellbar ist.

Die Aufgabe wird mit einem Lenkgetriebe mit den Merkmalen des Anspruchs 1 gelöst.

Dadurch dass das Adapterteil an dem axial verschiebbaren Bauelement mit einer Welle-Nabe-Verbindung festgelegt ist, die als kegelige Kerbzahnverbindung gebildet ist und die mit Hilfe einer Mutter auf einem Außengewinde an einem oder beiden axialen Enden des axial verschiebbaren Bauelements festgezogen ist, ist eine Verbindung des Adapterteils mit dem axial verschiebbaren Bauelement geschaffen, die hohe radiale Kräfte und Biegemomente in der Lage ist, aufzunehmen und in der Herstellung vereinfacht ist. Mit dem Außengewinde lassen sich wesentlich höhere Vorspannkräfte als bei den bekannten Lenkgetrieben erzeugen.

Bevorzugte Ausführungen ergeben sich aus den Unteransprüchen.

Die Kerbverzahnung lässt sich auf dem axial verschiebbaren Bauelement durch Wälzfräsen und an de Adapterteil durch Räumen und Aufdornen herstellen und ist in der Lage eine sehr sichere lagetreue Verbindung zwischen dem Adapterteil und dem axial verschiebbaren Bauteil zu erzeugen.

Es ist zweckmäßig, zwischen der Mutter und einer mutterseitigen Stirnfläche des Adapterteils eine Scheibe anzuordnen. Der Kegel im Bereich der Mitnahme der Welle-Nabe-Verbindung hat vorzugsweise einen Winkel von 1,5° bis 2°, kann sich aber auch bis hin zu einem Wert, wie ihn die DIN 254 beschreibt, also etwa 5,7° erstrecken. Der gesamte Verbindungsbereich zwischen einem Gehäuse des Lenkgetriebes über das Adapterteil bis hin zu einem Spurstangenkopf der Spurstange ist zweckmäßig von einem Abdichtelement, wie etwa einem Faltenbalg umschlossen und gegen Verschmutzung gesichert.

Anstatt eines Faltenbalgs ist auch die Anwendung von zwei Faltenbälgen je axialem Ende der Zahnstange oder des axial verschiebbaren Bauelements denkbar, indem ein Faltenbalg von dem Gehäuse des Lenkgetriebes bis zu einem Schaft an dem Adapterteil an der Welle-Nabe-Verbindung geführt ist und ein weiterer Faltenbalg von einem Flansch an dem Gelenk der Spurstange von dem Adapterteil bis über einen Spurstangenschaft geführt ist, sodaß das Adapterteil selbst im Wesentlichen ungeschützt bleibt. Das Gelenk zwischen dem Adapterteil und der Spurstange ist zweckmäßig als Kugelgelenk ausgebildet. Das erfindungsgemäße Lenkgetriebe eignet sich für eine Hilfskraft- oder Fremdkraftlenkung eines Kraftfahrzeugs.

Die Erfindung wird nun näher anhand eines Ausführungsbeispiels beschrieben und anhand der beiliegenden Zeichnung wiedergegeben.

In der Zeichnung zeigt:
- Fig. 1: einen teilweisen schematischen Längsschnitt durch ein erfindungsgemäßes Lenkgetriebe,
- Fig. 2: eine perspektivische Ansicht eines axialen Endes eines axial verschiebbaren Bauelements mit einer erfindungsgemäßen Welle-Nabe-Verbindung,
- Fig. 3: eine perspektivische Ansicht eines Adapterteils mit einer erfindungsgemäßen Welle-Nabe-Verbindung,
- Fig. 4: einen weiteren teilweisen schematischen Längsschnitt durch ein erfindungsgemäßes Lenkgetriebe,

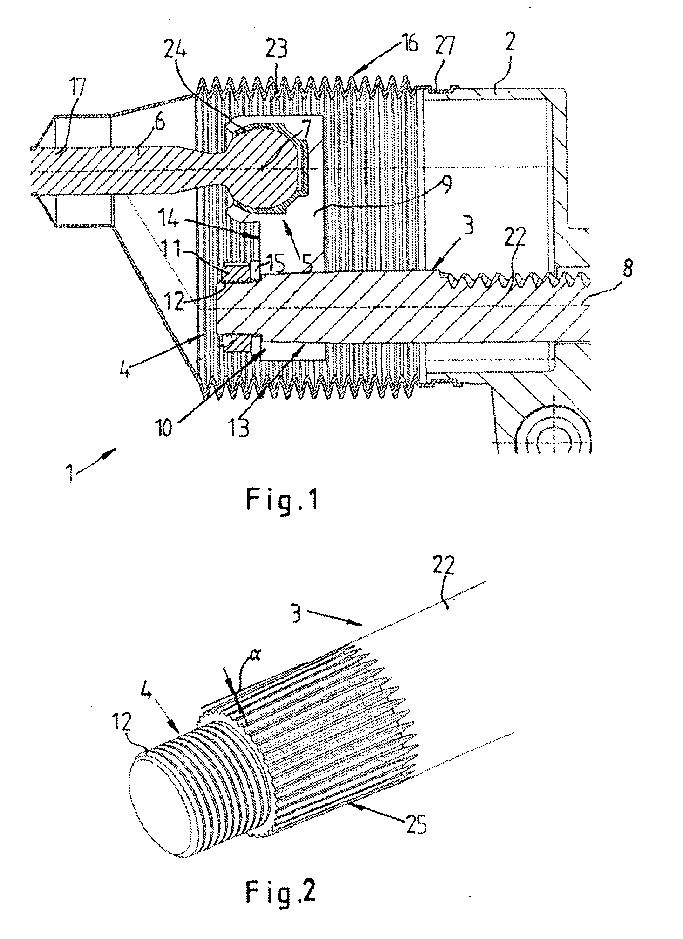

In Fig. 1 ist in einem teilweisen schematischen Längsschnitt ein Lenkgetriebe 1 mit seinem Gehäuse 2 einer elektrischen Hilfskraftlenkung eines Personenkraftwagens gezeigt. Von dem Gehäuse 2, in dem ein axial verschiebbares Bauelement 3, das als Zahnstange 22 gebildet ist, gelagert ist, ist lediglich ein Endbereich gezeigt. Auf einem axialen Ende 4 der Zahnstange 22 ist ein Adapterteil 9 formschiüssig lösbar mit einer Welle- Nabe- Verbindung 10 festgelegt, welches einen gekröpften, seitwärts gerichteten Fortsatz der Zahnstange 22 bildet.

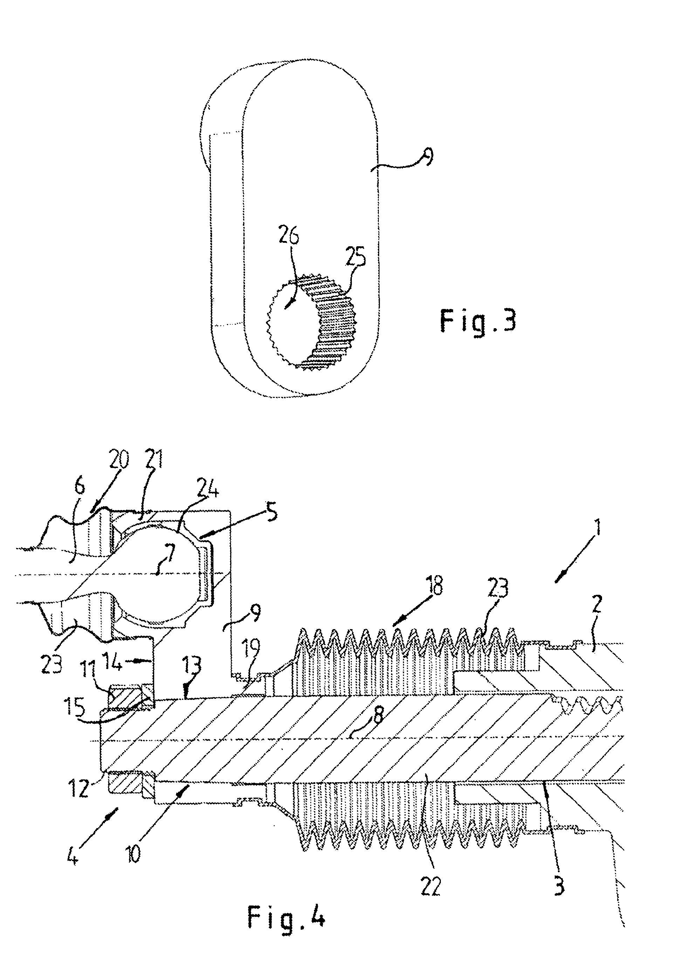

Wie Fig. 2 in einer perspektivischen Ansicht des axialen Endes 4 der Zahnstange 22 zeigt, ist die Welle- Nabe- Verbindung 10 als kegelige Kerbzahnverbindung 13 gebildet, wobei eine durch Wälzfräsen gebildete Kerbverzahnung 25 mit einem Kegelwinkel α von 1,5° an dem Ende 4 angeordnet ist. Diese erlaubt mit Hilfe einer durch Räumen und Aufdomen gebildeten kegeligen Kerbverzahnung in einer Öffnung 26 des Adapterteils 9 (vgl. Fig. 3) und einem Außengewinde 12 auf das eine Mutter 11 aufgeschraubt ist, eine sichere Verbindung beider Teile. Das Außengewinde 12 ist wesentlich größer wählbar als das aus dem Stand der Technik bekannte Innengewinde und daher in der Lage, wesentlich höhere Vorspannkräfte, die doppelt so hoch sein können wie bei dem aus dem Stand der Technik bekannten Lenkgetrieben, zu erzeugen. Die kegelige Kerbzahnverbindung 13 erlaubt zudem eine feinstufige Justage der Drehlage des Adapterteils 9 zu der Mittellängsachse 8 der Zahnstange 22.

An dem Adapterteil 9 ist, wie die Figuren 1 und 4 zeigen, eine Spurstange 6 zur gelenkigen Verbindung der Zahnstange 22 mit einem nicht gezeigten Radlenkhebel eines gelenkten Rades des Fahrzeugs über ein als Kugelgelenk 24 gebildetes Gelenk 5 angebunden. Das Drehzentrum 7 der Spurstange 6 ist radial versetzt von der Mittellängsachse 8 der Zahnstange 22. Zwischen einer Stirnfläche 14 des Adapterteils 9 und der Mutter 11 ist eine Scheibe 15 festgelegt.

In Fig. 1 ist ein Ausführungsbeispiel des Lenkgetriebes 1 gezeigt, welches über ein einziges Abdichtelement 16 - einen Faltenbalg 23 - von dem Gehäuse 2 des Lenkgetriebes 1 bis zu einem Spurstangenschaft 17 reichend das Adapterteil vollflächig mit Abstand überragt und ein Eindringen von Stoffen aller Art in das Gehäuse 2 des Lenkgetriebes 1 verhindert. Das Abdichtelement 16 wird mit Spannbändern 27 in einer Umfangsnut des Gehäuses 2 und an dem Spurstangenschaft 17 gehalten.

Das in der Fig. 4 gezeigte Ausführungsbeispiel zeigt ein Abdichtelement 18, welches lediglich von dem Gehäuse 2 des Lenkgetriebes 1 bis zu einem gehäuseseitigen Schaft 19 des Adapterteils 9 reicht und das Gehäuse 2 vor Eindringen von Stoffen schützt. Ein zweites Abdichtelement 20 ist von einem Flansch 21 des Adapterteils 9 in dessen Gelenkbereich bis zu dem Spurstangenschaft 17 geführt und schützt das Gelenk 5.

### Bezugszeichenliste

- 1: Lenkgetriebe
- 2: Gehäuse
- 3: Bauelement, axial verschiebbar
- 4: Ende, axial
- 5: Gelenk
- 6: Spurstange
- 7: Drehzentrum
- 8: Mittellängsachse
- 9: Adapterteil
- 10: Welle- Nabe- Verbindung
- 11: Mutter
- 12: Außengewinde
- 13: Kerbzahnverbindung, kegelig
- 14: Stirnfläche
- 15: Scheibe
- 16: Abdichtelement
- 17: Spurstangenschaft
- 18: Abdichtelement
- 19: Schaft
- 20: Abdichtelement
- 21: Flansch
- 22: Zahnstange
- 23: Faltenbalg
- 24: Kugelgelenk
- 25: Kerbverzahnung
- 26: Öffnung
- 27: Spannband
- α: Kegelwinkel

## Patentansprüche

1. Lenkgetriebe für eine Servolenkung eines Fahrzeugs, mit einem, in einem Gehäuse (2) des Lenkgetriebes (1) axial verschiebbar gelagerten Bauelement (3), an dessen zumindest einem axialen Ende (4) über ein Gelenk (5) eine Spurstange (6) gelenkig festgelegt ist, wobei ein Drehzentrum (7) des Gelenks (5) gegenüber einer Mittellängsachse (8) des axial verschiebbaren Bauelement (3) seitwärts versetzt an einem radial gerichteten Adapterteil (9) angeordnet ist, wobei das Adapterteil (9) an dem axial verschiebbaren Bauelement (3) mit einer Welle-Nabe- Verbindung (10) festgelegt ist, die mit Hilfe einer Mutter (11) auf einem Außengewinde (12) an dem axialen Ende (4) des axial verschiebbaren Bauelements (3) festgezogen ist, **dadurch gekennzeichnet, dass** die Welle-Nabe-Verbindung (10) durch eine spielfreie, kegelige Kerbzahnverbindung (13) gebildet ist.

2. Lenkgetriebe nach Anspruch 1 , **dadurch gekennzeichnet, dass** zwischen einer Stirnfläche (14) des Adapterteiles (9) und der Mutter (11) eine Scheibe (16) gelegt ist.

3. Lenkgetriebe nach einem der Ansprüche 1 oder 2, **dadurch gekennzeichnet, dass** der Kegelwinkel (α) der Welle- Nabe- Verbindung (10) etwa 1,5° bis 2,0° beträgt.

4. Lenkgetriebe nach einem der Anpsrüche1 bis 3, **dadurch gekennzeichnet, dass** ein Abdichtelement (16) von dem Gehäuse (2) des Lenkgetriebes (1) bis zu einem Spurstangenschaft (17) der Spurstange (6) über das Adapterteil (9) gestülpt ist und das Lenkgetriebe (1) gegen von außen eindringende Stoffe schützt und von innen aus dem Gehäuse (2) des Lenkgetriebes (1) weichende Stoffe zurückhält.

5. Lenkgetriebe nach einem der Ansprüche 1 bis 4, **dadurch gekennzeichnet, dass** ein Abdichtelement (18) von dem Gehäuse (2) des Lenkgetriebes (1) bis zu einem Schaft (19) des Adapterteils (9) an der Welle- Nabe -Verbindung (10) geführt ist und ein Abdichtelement (20) von einem gelenkseitigen Flansch (21) des Adapterteils (9) zu dem Spurstangenschaft (17) geführt ist.

6. Lenkgetriebe nach einem der Ansprüche 1 bis 5, **dadurch gekennzeichnet, dass** das axial verschiebbare Bauelement (3) eine Zahnstange (22) ist.

7. Lenkgetriebe nach einem der Ansprüche 4 bis 6, **dadurch gekennzeichnet, dass** die Abdichtelemente (16,18,19) Faltenbälge (23) sind.

8. Lenkgetriebe nach einem der Ansprüche 1 bis 7, **dadurch gekennzeichnet, dass** das Gelenk (5) ein Kugelgelenk (24) ist.

9. Hilfskraft-oder Fremdkraft-Lenkung eines Kraftfahrzeugs mit einem eingebauten Lenkgetriebe (1) nach einem der Ansprüche 1 bis 8.

## Claims

1. A steering gear for a power steering system of a vehicle, comprising a component (3) that is mounted axially displaceably in a housing (2) of the steering gear (1), a tie rod (6) being fixed in an articulated manner on at least one axial end (4) of the component by way of a joint (5), with a rotational center (7) of the joint (5) being disposed on a radially directed adapter part (9) laterally offset with respect to a central longitudinal axis (8) of the axially displaceable component (3), and the adapter part (9) being fixed to the axially displaceable component (3) by way of a shaft-hub connection (10), which is fastened on the axial end (4) of the axially displaceable component (3) using a nut (11) on an external thread (12), **characterized in that** the shaft-hub connection (10) is formed by a play-free conical serrated connection (13).

2. The steering gear according to claim 1, **characterized in that** a disk (16) is placed between a face (14) of the adapter part (9) and the nut (11).

3. The steering gear according to either claim 1 or 2, **characterized in that** the cone angle (α) of the shaft-hub connection (10) is approximately 1.5° to 2.0°.

4. A steering gear according to any one of claims 1 to 3, **characterized in that** a sealing element (16) is slid over the adapter part (9) from the housing (2) of the steering gear (1) to a tie rod shaft (17) of the tie rod (6) and protects the steering gear (1) from substances penetrating from the outside and keeps substances from escaping from the inside of the housing (2) of the steering gear (1).

5. A steering gear according to any one of claims 1 to 4, **characterized in that** a sealing element (18) is guided from the housing (2) of the steering gear (1) to a shaft (19) of the adapter part (9) on the shaft-hub connection (10) and a sealing element (20) is guided from a joint-side flange (21) of the adapter part (9) to the tie rod shaft (17).

6. A steering gear according to any one of claims 1 to 5, **characterized in that** the axially displaceable component (3) is a throttled rack (22).

7. A steering gear according to any one of claims 4 to 6, **characterized in that** the sealing elements (16, 18, 19) are bellows (23).

8. A steering gear according to any one of claims 1 to 7, **characterized in that** the joint (5) is a ball joint (24).

9. A power-assisted or servo steering system of a motor vehicle with an installed steering gear (1) according to any one of claims 1 to 8.

## Revendications

1. Mécanisme de direction pour une direction assistée d'un véhicule, comprenant un élément structurel (3) monté de manière déplaçable axialement dans un boîtier (2) du mécanisme de direction (1), à au moins l'une des extrémités axiales (4) duquel est fixée de manière articulée par le biais d'une articulation (5) une tige d'accouplement (6), un centre de rotation (7) de l'articulation (5) étant disposé, de manière décalée latéralement par rapport à un axe longitudinal médian (8) de l'élément structurel (3) déplaçable axialement, sur une partie d'adaptateur (9) orientée radialement, la partie d'adaptateur (9) étant fixée sur l'élément structurel déplaçable axialement (3) par une liaison arbre-moyeu (10), qui est attachée à l'aide d'un écrou (11) sur un filetage extérieur (12) à l'extrémité axiale (4) de l'élément structurel déplaçable axialement (3), **caractérisé en ce que** la liaison arbre-moyeu (10) est formée par une liaison dentelée conique sans jeu (13).

2. Mécanisme de direction selon la revendication 1, **caractérisé en ce qu'**un disque (16) est placé entre une face frontale (14) de la partie d'adaptateur (9) et l'écrou (11).

3. Mécanisme de direction selon la revendication 1 ou 2, **caractérisé en ce que** l'angle de conicité (α) de la liaison arbre-moyeu (10) est d'environ 1,5° à 2,0°.

4. Mécanisme de direction selon l'une quelconque des revendications 1 à 3, **caractérisé en ce qu'**un élément d'étanchéité (16) est enfilé par-dessus la partie d'adaptateur (9) depuis le boîtier (2) du mécanisme de direction (1) jusqu'à un arbre de tige d'accouplement (17) de la tige d'accouplement (6), et protège le mécanisme de direction (1) contre des substances pénétrant depuis l'extérieur, et empêche la fuite de substances depuis l'intérieur hors du boîtier (2) du mécanisme de direction (1).

5. Mécanisme de direction selon l'une quelconque des revendications 1 à 4, **caractérisé en ce qu'**un élément d'étanchéité (18) est guidé depuis le boîtier (2) du mécanisme de direction (1) jusqu'à un arbre (19) de la partie d'adaptateur (9) au niveau de la liaison arbre-moyeu (10) et un élément d'étanchéité (20) est guidé depuis une bride (21) de la partie d'adaptateur (9), du côté de l'articulation, jusqu'à l'arbre de tige d'accouplement (17).

6. Mécanisme de direction selon l'une quelconque des revendications 1 à 5, **caractérisé en ce que** l'élément structurel déplaçable axialement (3) est une crémaillère (22).

7. Mécanisme de direction selon l'une quelconque des revendications 4 à 6, **caractérisé en ce que** les éléments d'étanchéité (16, 18, 19) sont des soufflets (23).

8. Mécanisme de direction selon l'une quelconque des revendications 1 à 7, **caractérisé en ce que** l'articulation (5) est une articulation à rotule (24).

9. Direction assistée ou servodirection d'un véhicule automobile, comprenant un mécanisme de direction intégré (1) selon l'une quelconque des revendications 1 à 8.
